# EUROPEAN PATENT SPECIFICATION

(11) **EP 2 226 699 B1**
(45) Date of publication and mention of the grant of the patent: **06.12.2017**
(21) Application number: 09161396.8
(22) Date of filing: 28.05.2009
(51) Int. Cl.: G05F 1/46, H02M 3/00, H02J 1/00

(54) **APPARATUS AND METHOD FOR SUPPLYING POWER TO ELECTRONIC DEVICE**
VORRICHTUNG UND VERFAHREN ZUR STROMVERSORGUNG EINES ELEKTRONISCHEN GERÄTES
APPAREIL ET PROCÉDÉ D'ALIMENTATION ÉLECTRIQUE D'UN DISPOSITIF ÉLECTRONIQUE

(30) Priority: 02.03.2009 KR 20090017501
(43) Date of publication of application: 08.09.2010
(73) Proprietor: LG Electronics Inc., Seoul 150-721 (KR)
(72) Inventor: OH, Jang Geun, 153-801, SEOUL (KR)
(74) Representative: Cabinet Plasseraud

(56) References cited:
- JP-A- H1 141 825
- JP-A- 2007 244 046
- US-A1- 2005 242 792
- US-A1- 2008 169 703

## Description

This application claims the benefit of Korean Patent Application No. 10-2009-0017501, filed on March 02, 2009.

### BACKGROUND OF THE INVENTION

This document relates to an apparatus and method of supplying power to an electronic device.

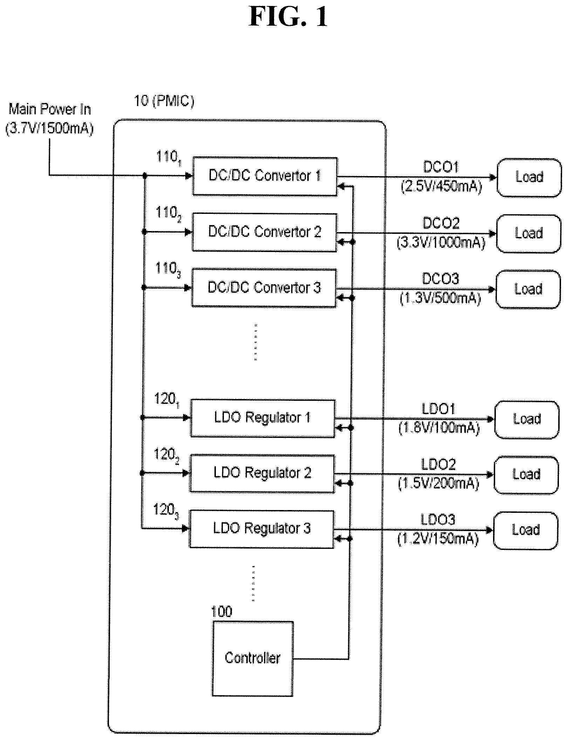

Generally, power supplies for electronic devices such as mobile phones, personal digital assistants (PDAs), and laptop computers include a power management integrated circuit (PMIC) 10 as shown in Fig. 1.

The PMIC 10 includes a controller 100, a plurality of DC/DC converters 110₁, 110₂, and 110₃, and a plurality of low-dropout (LDO) regulators 120₁, 120₂, and 120₃.

The controller 100 enables the plurality of DC/DC converters and LDO regulators to have a predetermined initial (power) value when the electronic device is system-booted.

Accordingly, main power supplied to the PMIC 10 is converted to different output power components. For example, main power of 3.7V/1500mA supplied from a battery is converted to DCO1 (DC output1) power of 2.5V/450mA by the first DC/DC converter 110₁.

The main power is also converted to DCO2 power of 3.3V/1000mA by the second DC/DC converter 110₂, and to DCO3 power of 1.3V/500mA by the third DC/DC converter 110₃.

The main power of 3.7V/1500mA is converted to LDO1 power of 1.8V/100mA by the first LDO regulator 120₁, LDO2 power of 1.5V/200mA by the second LDO regulator 120₂, and LDO3 power of 1.2V/150mA by the third LDO regulator 120₃.

Each converted output power is supplied to each different load as operating power. The DC/DC converter is a voltage converting device for making an output voltage higher or lower than an input voltage. A converter for converting a low input voltage to a higher output voltage is called "step-up converter" and a converter for converting a high input voltage to a lower output voltage is called "step-down converter".

For example, a step-up converter employs a buck DC/DC converter and a step-down converter employs a boost converter. In general, DC/DC converters are classified into PWM (Pulse Width Modulation) type DC/DC converters and PFM (Pulse Frequency Modulation) type DC/DC converters based on switching scheme.

Meanwhile, LDO regulators have the advantage of being capable of supplying a stable voltage having reduced ripple components, as is widely known. In the case of a high input voltage, however, significant power loss may occur while the high input voltage is converted to a lower output voltage.

US2008/169703 discloses an apparatus for managing power in a mobile telephone. The apparatus has two voltage regulating units each converting power to a different level. A switching unit can switch between the two regulating units.

JP2007 244046 discloses a power supply circuit for a mobile device that has three regulators, each converting voltage from a battery to a different level. Dependent on the mode of the mobile device, a different regulator is selected to avoid waste by supplying an unnecessarily high voltage.

### SUMMARY OF THE INVENTION

An aspect of this document provides an apparatus and method of supplying power to an electronic device, which may reduce power loss caused by LDO regulators in a power management integrated circuit (PMIC).

In an aspect, an apparatus for supplying power to an electronic device according to claim 1 is provided.

In an example useful for understanding the invention, an apparatus for supplying power to an electronic device includes a plurality of DC/DC converters configured to output power; a plurality of LDO regulators configured to output converted power; and a controller configured to control supply of the output power of the at least one of the plurality of DC/DC converters to the at least one of the plurality of LDO regulators as input power, and to variably control the at least one of the plurality of DC/DC converters to variably adjust the input power of the at least one of the plurality of LDO regulators.

In another aspect, a method according to claim 5 is provided.

In yet another example useful for understanding the invention, a method for supplying power to an electronic device includes supplying output power of a DC/DC converter to an LDO regulator as input power; and variably controlling the DC/DC converter based on a state of a load connected at an output end of the DC/DC converter and a state of a load connected at an output end of the LDO regulator to change the input power of the LDO regulator.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Fig. 1 is a view illustrating a construction of a conventional power supply.
Fig. 2 is a view schematically illustrating a construction of a power supply according to an example.
Figs. 3 and 5 to 8 are views illustrating power supplies according to embodiments in more detail. Fig. 4 is a view illustrating a power supply according to an example.
Figs. 9 and 10 are views schematically illustrating power supplies according to other examples.
Fig. 11 is a flowchart illustrating a power supplying method according to an embodiment.

### DETAILED DESCRIPTION OF THE ILLUSTRATED EMBODIMENTS

The above and other objects, features, and advantages of this document will become more apparent from the following detailed description of exemplary embodiments with reference to the accompanying drawings. Throughout the drawings, the same reference numerals are used to denote like structures. Well-known structures or functions will not be described in detail if deemed that such description would detract from the clarity and concision of this document.

This document relates to a power supply for electronic devices such as mobile phones, PDAs, and laptop computers. The power supply employs a power management integrated circuit (PMIC) that includes a plurality of DC/DC converters, a plurality of LDO regulators, and a controller.

The PMIC includes a switching element for selecting any one of a plurality of different powers sources and supplies as low an input voltage as possible to the LDO regulator.

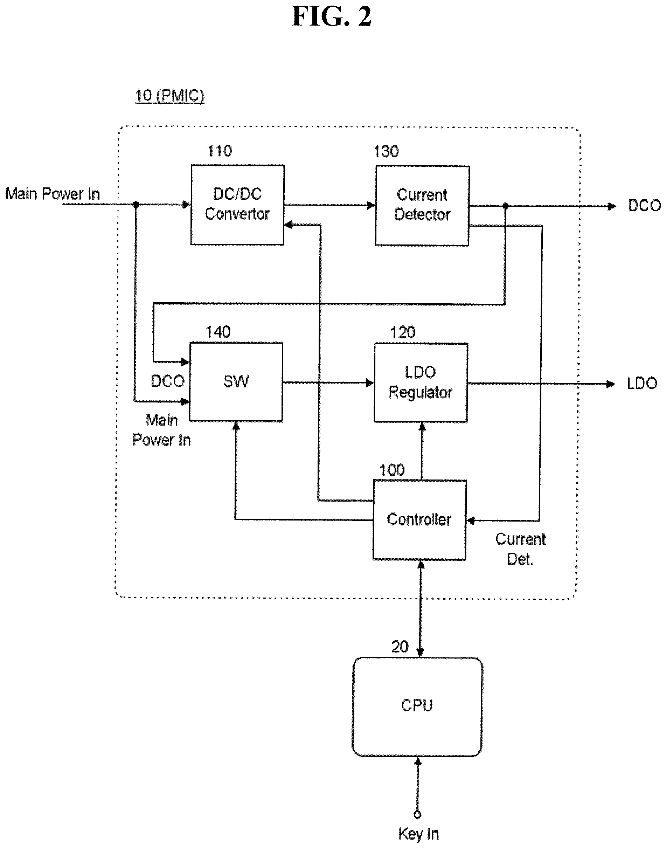

For example, a switching element 140 may be supplied with main power from a battery and DCO power converted by a DC/DC converter 110, as shown in Fig. 2.

A controller 100 controls a switching element 140 to selectively supply the main power or the DCO power to an LDO regulator 120.

Meanwhile, a current detector 130 may be provided at the rear end of the DC/DC converter 110, as shown in Fig. 2. In this case, the controller 100 controls the switching element 140 so that a current value detected by the current detector 130 does not exceed a predetermined reference current value.

For example, as the number of loads, which are provided at the rear end of the DC/DC converter 110 and the LDO regulator 120 and consume power, increases, the current value detected by the current detector 130 increases correspondingly. Thus, the controller 100 controls the switching element 140 to selectively supply the LDO regulator 120 with the main power having relatively high voltage and current values.

On the contrary, as the number of loads, which are provided at the rear end of the DC/DC converter 110 and the LDO regulator 120 and consume power, decreases, the current value detected by the current detector 130 also decreases. Thus, the controller 100 controls the switching element 140 to selectively supply the LDO regulator 120 with the DCO power having relatively low voltage and current values.

Accordingly, the input voltage of the power supplied to the LDO regulator 120 may become as low as possible, and this may reduce power loss caused by the LDO regulator 120.

Meanwhile, if the current detector 130 is not provided, the controller 100 predicts whether the number of loads connected at the rear end of the DC/DC converter 110 and the LDO regulator 120 increases or decreases by interfacing with a CPU 20 that executes various application programs in response to a user's key entries (Key In).

When the number of loads is predicted to increase, the controller 100 selects the main power and supplies it to the LDO regulator 120, and when the number of loads is predicted to decrease, the controller 100 selects the DCO power and supplies it to the LDO regulator 120.

Accordingly, the input voltage supplied to the LDO regulator 120 may be as low as possible, and thus, power loss caused by the LDO regulator 120 may be reduced.

Meanwhile, the controller 100 determines whether the source of supplying the main power is a battery, or an external power source that supplies unlimited power, and if the source is an external power source, the controller 100 allows the external power source to continue to supply power to the LDO regulator 120.

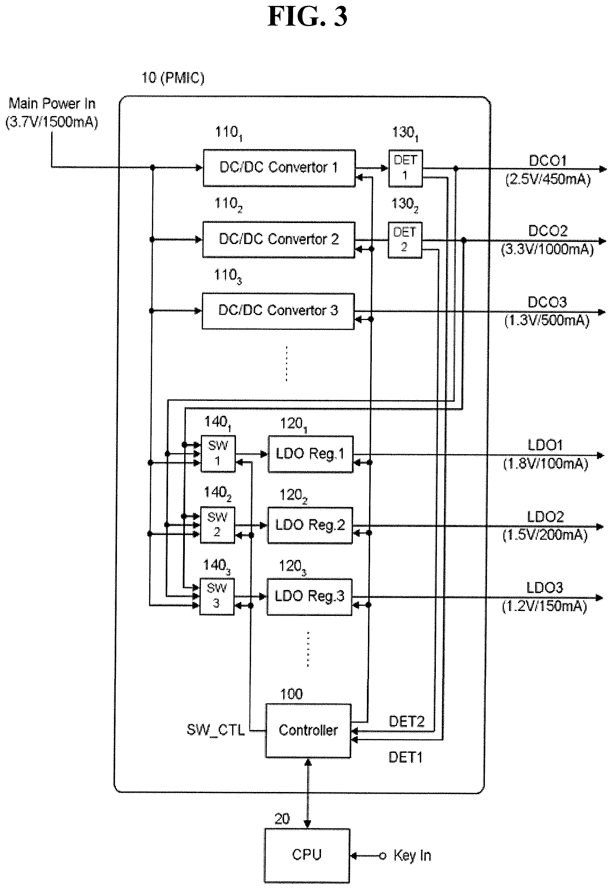

Fig. 3 is a view illustrating a power supply for an electronic device according to an embodiment in more detail. For example, a power management integrated circuit 10 according to the embodiment includes a controller 100, a plurality of DC/DC converters 110₁, 110₂, and 110₃, and a plurality of LDO regulators 120₁, 120₂, and 120₃. Switching elements 140₁, 140₂, and 140₃ are provided at a front (input) ends of the LDO regulators to select different power.

At least one current detector may be provided at the rear end of at least one of the DC/DC converters. For example, a first current detector 130₁ and a second current detector 130₂ may be provided at the rear ends of the first DC/DC converter 110₁ and the second DC/DC converter 110₂, respectively, and the first to third switching elements 140₁ to 140₃ may be provided at the front ends of the first to third LDO regulators 120₁ to 120₃, respectively.

The first to third switching elements 140₁ to 140₃ are supplied with the main power of 3.7V/1500mA, the DCO1 power of 2.5V/450mA, and the DCO2 power of 3.3V/1000mA, respectively. The power supplied to the first to third switching elements 140₁ to 140₃ has higher voltage than the output voltages of the first to third LDO regulators 120₁ to 120₃.

For example, the DCO3 power of 1.3V/500mA converted by the third DC/DC converter 110₃ is not appropriate as the input power of the first LDO regulator 120₁ that outputs the LDO1 power of 1.8V/100mA, or as the input power of the second LDO regulator 120₂ that outputs the LDO2 power of 1.5V/200mA. Thus, the DCO3 power is not used as the input power of the first to third switching elements 140₁ to 140₃.

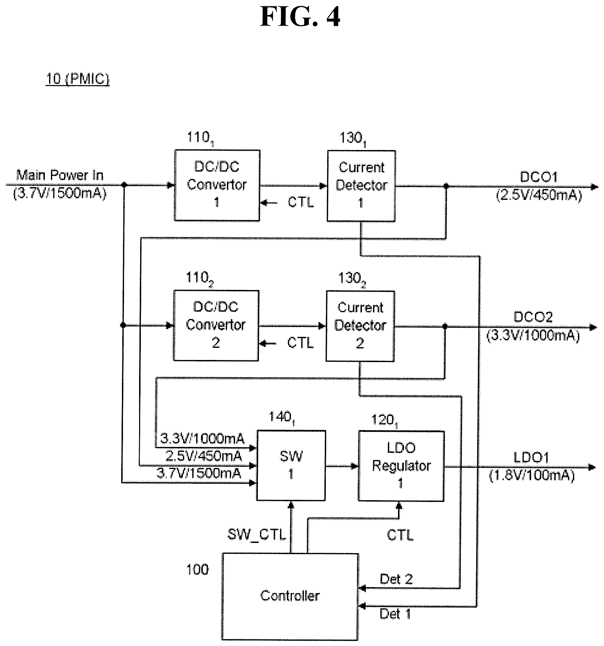

Meanwhile, in the case of selecting, for example, the DCO1 power of 2.5V/450mA among the plurality of power sources input to the first switching element, the controller 100 verifies the current value detected by the first current detector 130₁ connected to the DCO1 power source and supplies the selected DCO1 power of 2.5V/450mA to the first LDO regulator 120₁ as the input power, as shown in Fig. 4.

When the current value detected by the first current detector 130₁ exceeds a reference current value (e.g. 400mA) set to be lower than, for example, the DCO1 power of 2.5V/450mA by a constant current value, the controller 100 determines that the number of power-consuming loads connected at the rear end of the first DC/DC converter 1101 and at the rear end of the first LDO regulator 1201 has increased.

When the current value detected by the first current detector 130₁ exceeds the reference current value set to be lower than, for example, the DCO1 power of 2.5V/450mA by the constant current value, the controller 100 selects the DCO2 power of 3.3V/1000mA among the plurality of power sources input to the first switching element 140₁ and supplies it to the first LDO regulator 120₁ as the input power.

Then, the controller 100 verifies the current value detected by the second current detector 130₂ connected to the DCO2 power source. When the detected current value exceeds a reference current value (e.g. 900mA) set to be lower than, for example, the DCO2 power of 3.3V/1000mA by a constant current value, the controller 100 determines that the number of power-consuming loads connected at the rear end of the second DC/DC converter 110₂ and at the rear end of the first LDO regulator 120₁ has increased.

When the current value detected by the second current detector 130₂ exceeds the reference current value set to be lower than, for example, the DCO2 power of 3.3V11000mA by the constant current value, the controller 100 performs a switching control operation of selecting the main power of 3.7V/1500mA among the plurality of power input to the first switching element 140₁ and supplying it to the first LDO regulator 120₁ as the input power.

That is, the controller 100 verifies the current values detected by the first current detector 130₁ and the second current detector 130₂, preferentially selects power having as low a voltage as possible, and supplies it to the LDO regulator as the input power. This enables power loss caused by the LDO regulator to be minimized.

If the current values detected by the first and second current detectors 130₁ and 130₂ are both lower than predetermined reference current values (e.g. 400mA and 900mA, respectively) while the main power of 3.7V/1500mA is supplied to the first LDO regulator 120₁ as the input power, the controller 100 selects the DCO1 power of 2.5V/450mA having the lowest voltage value and supplies it to the first LDO regulator 120₁ as the input power.

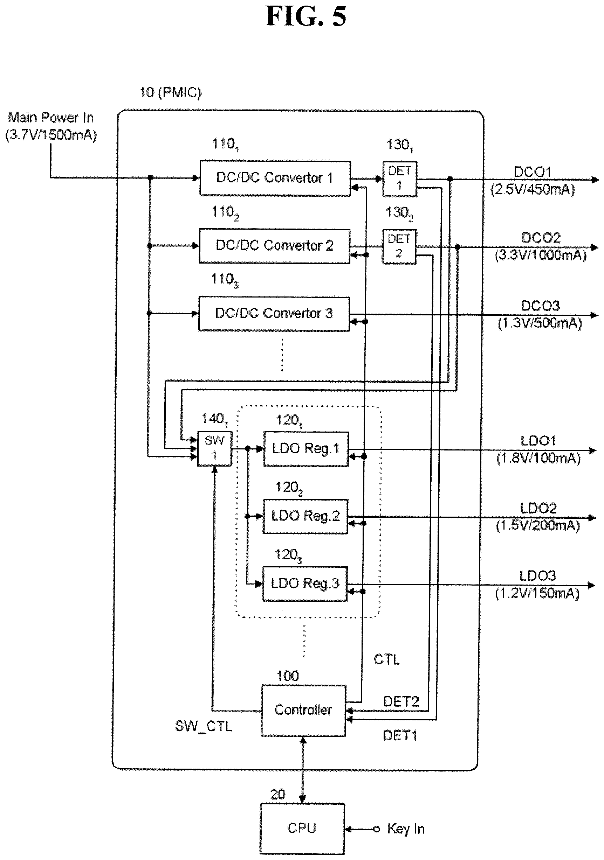

Meanwhile, the switching element may be commonly connected to the front ends of the plurality of LDO regulators. For example, the first switching element 140₁ may be commonly connected to the front ends of the LDO regulators 120₁ to 120₃ as shown in Fig. 5.

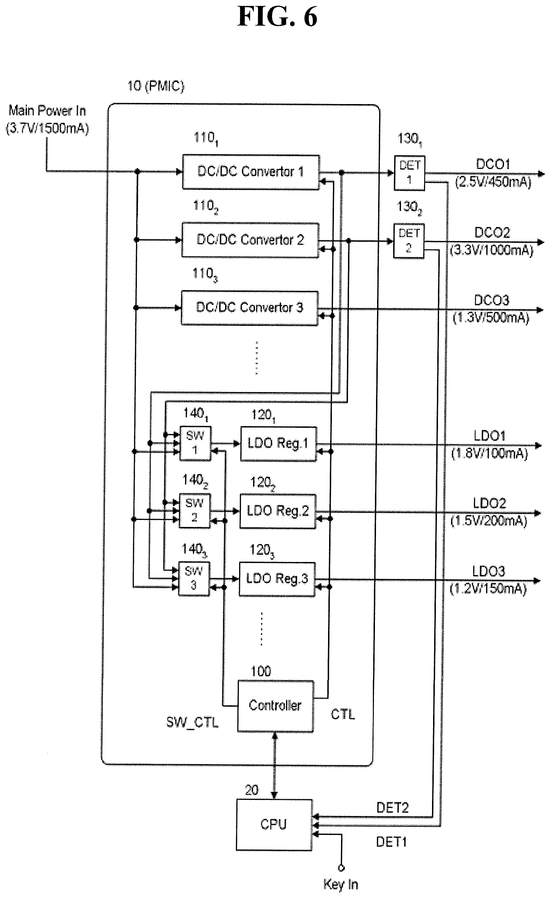

Further, the first current detector 130₁ and the second current detector 130₂ may be provided outside the PMIC 10 as shown in Fig. 6. In this case, the current values detected by the current detectors may be input to the controller 100 via the CPU 20.

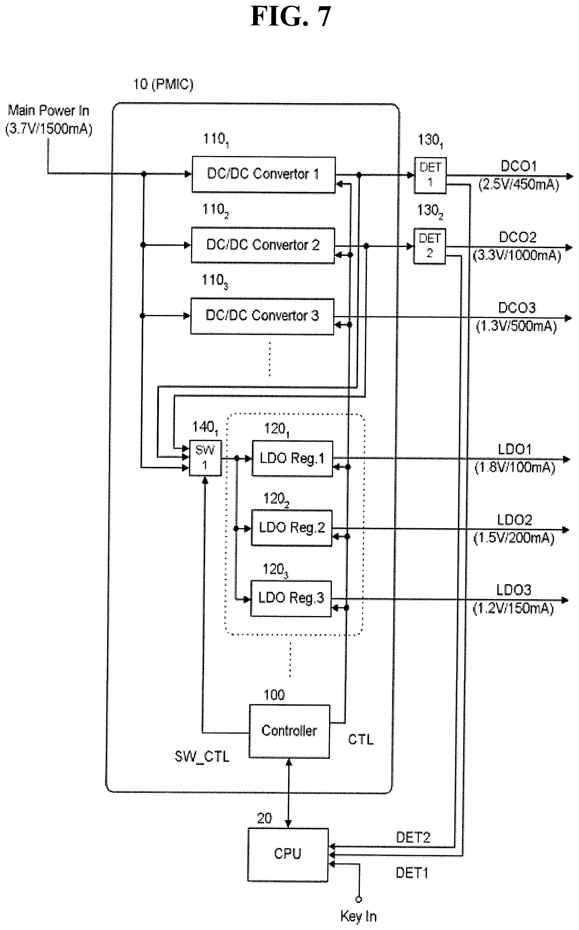

Besides the current detectors being provided outside the power management integrated circuit, the switching element may be commonly connected to the front ends of the plurality of LDO regulators as shown in Fig. 7.

The CPU 20 executes various application programs in response to a user's key entries. For example, upon receipt of a request to operate a camera module connected to the rear end of the first DC/DC converter 110₁, the CPU 20 generates a control signal and transmits it to the controller 100 so that the controller 100 may execute a corresponding application program.

Upon receipt of the control signal, the controller 100 predicts that the number of loads provided at the rear end of the first DC/DC converter 110₁ will increase, and controls the first switching element 140₁ to change the input power supplied to the first LDO regulator 120₁ to power having higher voltage and current values than the present input power in advance.

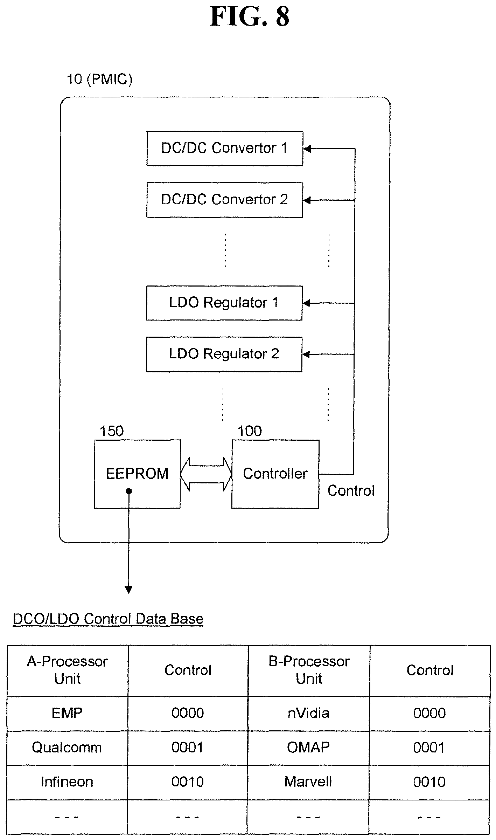

Meanwhile, as shown in FIG. 8, the PMIC 10 may include a non-volatile memory such as EEPROM which stores and manages control values of power sequences for controlling the order and timing of ON/OFF switching of the plurality of DC/DC converters and the plurality of LDO regulators.

For example, the non-volatile memory stores and manages as a DCO/LDO control database the control values of power sequences for supplying power suitably for processor unit A and processor unit B manufactured by different makers.

Processor unit A, which is a communication processor, may be manufactured by makers such as EMP, Qualcomm, Infineon, etc., and the DCO/LDO control database stores and manages the control values of power sequences suitably for processor unit A of each maker.

Processor unit B, which is a digital signal processor, may be manufactured by makers such as nVidia, QMAP, Marvell, etc., and the DCO/LDO control database stores and manages the control values of power sequences suitably for processor unit B of each maker.

Accordingly, engineers may design the PMIC more easily by identifying the makers of processor unit A and processor unit B, selecting and designating corresponding DCO/LDO control values from the DCO/LDO control database, and executing power sequences corresponding to the DCO/LDO control values.

Meanwhile, in another embodiment, output voltage from the DC/DC converter included in the PMIC may be supplied to the LDO regulator as the input power without separate switching elements.

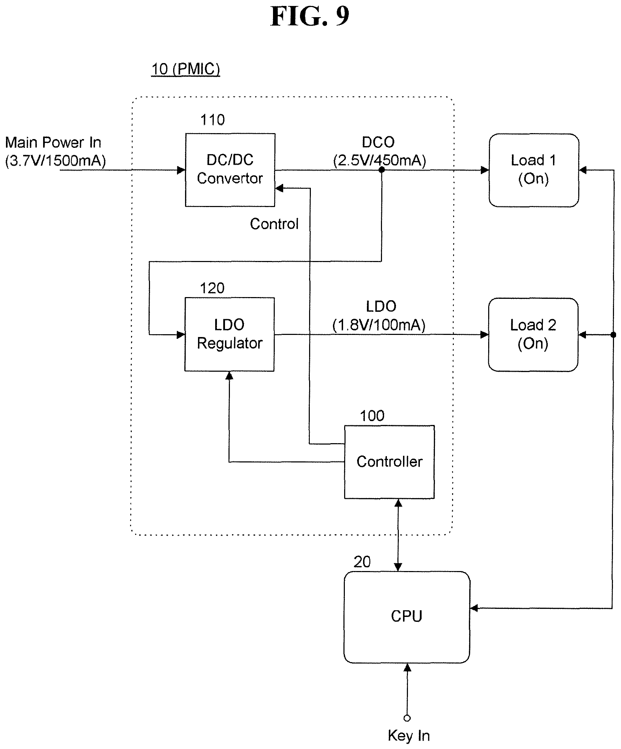

For example, while the output power DCO of 2.5V/450mA of the DC/DC converter 110 included in the PMIC is supplied to the LDO regulator 120 as the input power, the controller 100 interfaces with the CPU 20 to determine whether a power-consuming load 1 connected to the DC/DC converter 110 is operating, as shown in Fig. 9.

Meanwhile, the load 1 is a block that performs a specific function, such as an LCD module, a wired LAN module, a wireless LAN module, a Bluetooth module, a camera module, a projector module, etc.

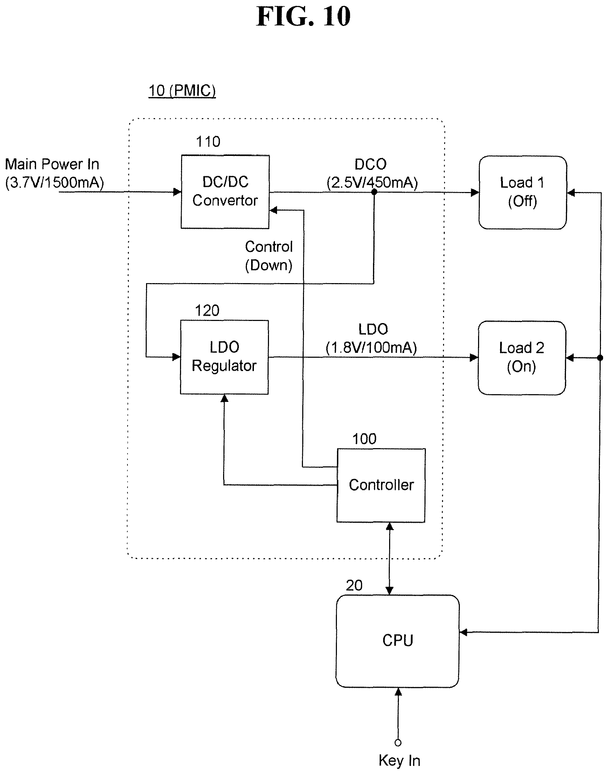

As a result of the determination, if the load 1 connected to the DC/DC converter 110 is not operating, as shown in Fig. 10, the controller 100 variably controls the DC/DC converter 110 so that the output power DCO has voltage and current values lower than 2.5V/450mA, for example, 2.0V/300mA.

Accordingly, voltage and current values lower than 2.5V/450mA, i.e. 2.0V/300mA, are input to the LDO regulator 120, and this may reduce power loss.

Meanwhile, when the controller 100 interfaces with the CPU 20 and determines that the load 1 connected to the DC/DC converter 110 is operating, the controller 100 variably controls the DC/DC converter 110 to return the output power DCO to the original voltage and current values, 2.5V/450mA, so that normal operating power is supplied to the load 1 connected to the DC/DC converter 110.

For reference, a high-power load such as a camera module is connected to the rear end of the DC/DC converter 110, a low-power load such as a memory module is connected to the rear end of the LDO regulator 120, and the CPU 20 selectively turns the camera module and the memory module on/off in response to the user's key entries.

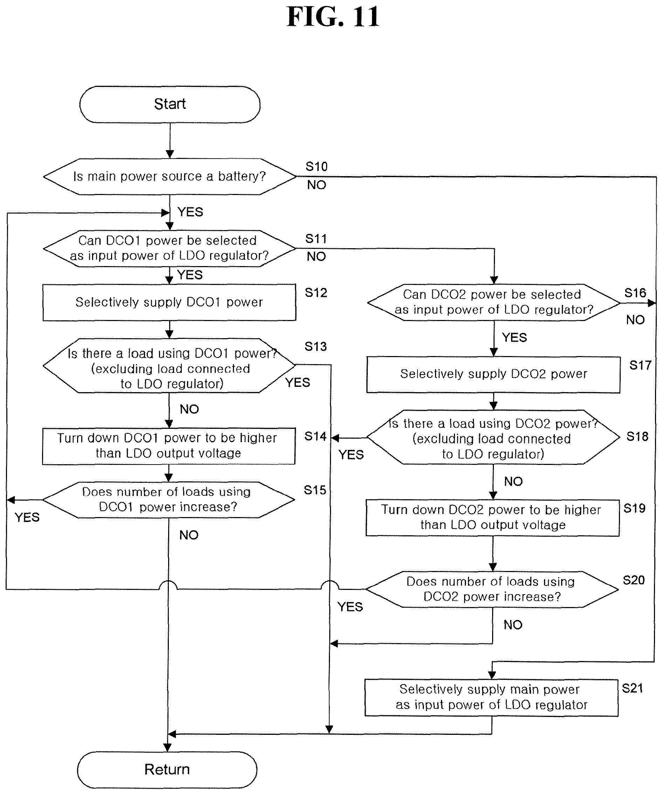

Fig. 11 is a flowchart illustrating a power supplying method according to an embodiment. The method will now be described with reference to Fig. 6.

When the main power source is a battery (step S10), the controller 100 included in the PMIC 10 determines whether the DCO1 power may be selected as the input power of the LDO regulator.

When it is determined that the DCO1 power may be selected (step S11), the controller 100 controls the switching element to selectively supply the DCO1 power to the LDO regulator as the input power (step S12), and then identifies the current value detected by the current detector or interfaces with the CPU to determine whether there is any load using the DCO1 power.

When it is determined that there is no load using the DCO1 power (step S13), the controller 100 variably controls the first DC/DC converter that outputs the DCO1 power to turn down the DCO1 power (step S14). However, the turned-down DCO1 power should be adjusted to have a higher voltage than the LDO output voltage.

When the number of loads using the DCO1 power increases (step S15), the controller 100 repeatedly performs the above series of steps.

On the other hand, when the DCO1 power may not be selected as the input power of the LDO regulator while the main power source is a battery, the controller 100 determines whether the DCO2 power may be selected as the input power of the LDO regulator.

When it is determined that the DCO2 power may be selected as the input power (step S16), the controller 100 controls the switching element to selectively supply the DCO2 power to the LDO regulator as the input power (step S17), and identifies the current value detected by the current detector, or interfaces with the CPU to determine whether there is any load using the DCO2 power.

When it is determined that there is no load using the DCO2 power (step S18), the controller 100 variably controls the second DC/DC converter that outputs the DCO2 power to turn down the DCO2 power (step S19). However, the turned-down DCO2 power should be adjusted to have a higher voltage than the LDO output voltage.

When the number of loads using the DCO2 power increases (step S20), the controller 100 repeatedly performs the above series of steps. If the main power source is not the battery but an external power source supplying unlimited power, the controller 100 continues to supply power to the LDO regulator as the input power by using the external power source (step S21).

## Claims

1. A power supplying apparatus comprising:
a main power input;
a plurality of DC/DC converters (110) having an input connected to the main power input and configured to respectively output power;
a plurality of low-dropout, LDO, regulators (120) configured to respectively output converted power to power-consuming loads;
one or more switching elements (140) that select any one of a plurality of different powers including the output power of the DC/DC converters (110) and input the selected power to the plurality of LDO regulators (120); and
a controller (100) that controls operation of the one or more switching elements (140) based on the converted power and the power-consuming loads; and **characterised in that** the power supplying apparatus further comprises:
a current detector (130) provided at an output end of at least one of the plurality of DC/DC converters (110);
wherein the controller (100) controls the operation of the one or more switching elements (140) so that a current value detected by the current detector (130) does not exceed a predetermined reference current value and power of at least one of the plurality of LDO regulators (120) in selecting as low a voltage as possible that is suitable for the at least one of the plurality of LDO regulators (120).

2. The apparatus of claim 1, wherein:
respective one of the one or more switching elements (140) is separately provided at an input end of each of the LDO regulators (120) or one of the one or more switching elements (140) is commonly provided at an input end of the plurality of LDO regulators (120), and
the plurality of different powers includes the output power of the DC/DC converters (110) and a main power externally input.

3. The apparatus of claim 1, wherein:
the controller (100) interfaces with a CPU (20) to predict whether a number of power-consuming loads connected at output ends of the DC/DC converters (110) and the power-consuming loads connected at output ends of the LDO regulators (120) will increase, and controls operation of the one or more switching elements (140) to select power having as low a voltage as possible that is suitable for the plurality of LDO regulators (120).

4. The apparatus of claim 3, wherein:
the CPU (20) interfaces with the controller (100) prior to executing an application program that corresponds to the increase in the number of power-consuming loads, and
the controller (100) interfaces with the CPU (20) to control operation of the switching element (140) before the application program is executed in anticipation of the increase in the number of power-consuming loads.

5. A method for supplying power, comprising:
selecting either one of main power supplied from a battery and DC Out (DCO) power supplied from a DC/DC converter (110) to supply the selected power to at least one LDO regulator (120) as input power; and
changing the selected power supplied to the at least one LDO regulator (120) to the other based on a state of a power-consuming load that is connected at an output end of the at least one LDO regulator (120); wherein the changing of the selected power includes detecting the current at the output of the DC/DC converter (110) and changing the input to the at least one LDO regulator (120) so that a current value detected does not exceed a predetermined reference current value and power of the at least one LDO regulator (120) in selecting as low a voltage as possible that is suitable for the at least one LDO regulator (120).

6. The method of claim 5, wherein:
a switching element (140) is provided at an input end of the at least one LDO regulator (120) to select either one of the main power and the DCO power, and
the switching element (140) is separately provided at the input end of the at least one LDO regulator (120) or commonly provided at respective input ends of a plurality of the LDO regulators (120).

## Patentansprüche

1. Stromversorgungsvorrichtung, die aufweist:
einen Hauptleistungseingang;
mehrere Gleichstrom-Gleichstrom-Wandler (110) mit einem Eingang, der mit dem Hauptleistungseingang verbunden ist und aufgebaut ist, um jeweils Leistung abzugeben;
mehrere Regler (120) mit geringem Dropout, LDO, die aufgebaut sind, um jeweils umgewandelte Leistung an stromverbrauchende Lasten abzugeben;
ein oder mehrere Schaltelemente (140), die eine beliebige von mehreren verschiedenen Leistungen, einschließlich der Ausgangsleistung der Gleichstrom-Gleichstrom-Wandler (110), auswählen und die ausgewählten Leistung in die mehreren LDO-Regler (120) einspeisen; und
eine Steuerung (100), die den Betrieb des einen oder der mehreren Schaltelemente (140) basierend auf der umgewandelten Leistung steuert; und
**dadurch gekennzeichnet, dass** die Stromversorgungsvorrichtung ferner aufweist:
eine Stromerfassungseinrichtung (130), die an einem Ausgangsende wenigstens eines der mehreren Gleichstrom-Gleichstorm-Wandler (110) bereitgestellt ist;
wobei die Steuerung (110) den Betrieb des einen oder der mehreren Schaltelemente (140) steuert, so dass ein von der Stromerfassungseinrichtung (130) erfasster Stromwert einen vorgegebenen Referenzstromwert nicht übersteigt und die Leistung wenigstens eines der mehreren LDO-Regler (120) bei der Auswahl eine möglichst niedrige Spannung ist, die für den wenigstens einen der mehreren LDO-Regler (120) passend ist.

2. Vorrichtung nach Anspruch 1, wobei
jeweils eines des einen oder der mehreren Schaltelemente (140) getrennt an einem Eingangsende jedes der LDO-Regler (120) bereitgestellt ist oder eines des einen oder der mehreren Schaltelemente (140) gemeinsam an einem Eingangsende der mehreren LDO-Regler (120) bereitgestellt ist, und
die mehreren verschiedenen Leistungen die Ausgangsleistung der Gleichstrom-Gleichstrom-Wandler (110) und eine von außen eingespeiste elektrische Hauptleistung umfassen.

3. Vorrichtung nach Anspruch 1, wobei:
die Steuerung (100) an eine CPU (20) ankoppelt, um vorherzusagen, ob eine Anzahl von stromverbrauchenden Lasten, die an Ausgangsenden der Gleichstrom-Gleichstrom-Wandler (110) angeschlossen sind, und die stromverbrauchenden Lasten, die an Ausgangsenden der LDO-Regler (120) angeschlossen sind, zunehmen wird, und den Betrieb des einen oder der mehreren Schaltelemente (140) steuert, um Leistung mit so niedriger Spannung wie möglich, die für die mehreren LDO-Regler passend ist, auszuwählen.

4. Vorrichtung nach Anspruch 3, wobei:
die CPU (20) vor der Ausführung eines Anwendungsprogramms, das der Zunahme der Anzahl von stromverbrauchenden Lasten entspricht, an die Steuerung (100) ankoppelt, und
die Steuerung (100) an die CPU (20) ankoppelt, um den Betrieb des Schaltelements (120) zu steuern, bevor das Anwendungsprogramm in Erwartung der Zunahme der Anzahl von stromverbrauchenden Lasten ausgeführt wird.

5. Verfahren zur Stromversorgung, das aufweist:
Auswählen einer Hauptleistung, die von einer Batterie oder einer Gleichspannungsausgangsleistung (DCO), die von einem Gleichstrom-Gleichstrom-Wandler (110) ausgegeben wird, geliefert wird, um die ausgewählte Leistung an wenigstens einen LDO-Regler (120) als Eingangsleistung zu liefern; und
basierend auf einem Zustand einer stromverbrauchenden Last, die mit einem Ausgangsende des wenigstens einen LDO-Reglers (120) verbunden ist, Ändern der ausgewählten Leistung, die an den wenigstens einen LDO-Regler (120) geliefert wird;
wobei das Ändern der ausgewählten Leistung das Erfassen des Stroms an dem Ausgang des Gleichstrom-Gleichstorm-Wandlers (110) und das Ändern des Eingangs des wenigstens einen LDO-Reglers (120) aufweist, so dass ein erfasster Stromwert einen vorgegebenen Referenzstromwert nicht übersteigt, und die Leistung des wenigstens einen LDO-Reglers (120) bei der Auswahl eine möglichst niedrige Spannung ist, die für den wenigstens einen LDO-Regler (120) passend ist.

6. Verfahren nach Anspruch 5, wobei
ein Schaltelement (140) an einem Eingangsende des wenigstens einen LDO-Reglers (120) bereitgestellt ist, um die Hauptleistung oder die DCO-Leistung auszuwählen, und
das Schaltelement (140) getrennt an dem Eingangsende des wenigstens einen LDO-Reglers (120) oder gemeinsam an jeweiligen Eingangsenden mehrerer der LDO-Regler (120) bereitgestellt ist.

## Revendications

1. Appareil d'alimentation en énergie électrique, comprenant :
une entrée d'alimentation électrique principale ;
une pluralité de convertisseurs CC/CC (110), possédant une entrée, connectée à l'entrée d'alimentation électrique principale, et configurés pour respectivement envoyer, en sortie, de l'énergie électrique ;
une pluralité de régulateurs à faible relâchement, LDO, (120), configurés pour respectivement envoyer, en sortie, de l'énergie électrique convertie à des charges consommatrices d'énergie électrique ;
un ou plusieurs éléments de commutation (140) qui sélectionnent l'une quelconque parmi une pluralité de différentes énergies électriques, incluant l'énergie électrique de sortie des convertisseurs CC/CC (110), et entrent l'énergie électrique sélectionnée dans la pluralité de régulateurs à LDO (120) ; et
un dispositif de commande (100) qui commande le fonctionnement de l'un ou plusieurs éléments de commutation (140) en fonction de l'énergie électrique convertie et des charges consommatrices d'énergie électrique ; et
**caractérisé en ce que** l'appareil d'alimentation en énergie électrique comprend en outre :
un détecteur de courant (130) prévu à une extrémité de sortie d'au moins l'un parmi la pluralité de convertisseurs CC/CC (110) ;
dans lequel le dispositif de commande (100) commande le fonctionnement de l'un ou plusieurs éléments de commutation (140) pour qu'une valeur de courant détectée par le détecteur de courant (130) ne dépasse pas une valeur de courant de référence prédéterminée et l'énergie électrique d'au moins l'un parmi la pluralité de régulateurs à LDO (120) dans la sélection d'une tension aussi basse que possible qui est appropriée pour l'au moins un parmi la pluralité de régulateurs à LDO (120).

2. Appareil selon la revendication 1, dans lequel :
l'un respectif de l'un ou plusieurs éléments de commutation (140) est séparément prévu à une extrémité d'entrée de chacun des régulateurs à LDO (120) ou l'un de l'un ou plusieurs éléments de commutation (140) est prévu en commun à une extrémité d'entrée de la pluralité de régulateurs à LDO (120), et
la pluralité de différentes énergies électriques inclut l'énergie électrique de sortie des convertisseurs CC/CC (110) et une énergie électrique principale entrée extérieurement.

3. Appareil selon la revendication 1, dans lequel :
le dispositif de commande (100) réalise une interface avec une CPU (20) pour prédire si un nombre de charges consommatrices d'énergie électrique connectées, à des extrémités de sortie des convertisseurs CC/CC (110), et les charges consommatrices d'énergie électrique connectées, à des extrémités de sortie des régulateurs à LDO (120), augmenteront ou non, et commande le fonctionnement de l'un ou plusieurs éléments de commutation (140) pour sélectionner l'énergie électrique possédant une tension aussi basse que possible qui est appropriée pour la pluralité de régulateurs à LDO (120).

4. Appareil selon la revendication 3, dans lequel :
la CPU (20) réalise une interface avec le dispositif de commande (100) avant d'exécuter un programme d'application qui correspond à l'augmentation du nombre de charges consommatrices d'énergie électrique, et le dispositif de commande (100) réalise une interface avec la CPU (20) pour commander le fonctionnement de l'élément de commutation (140) avant que le programme d'application soit exécuté en anticipation de l'augmentation du nombre de charges consommatrices d'énergie électrique.

5. Procédé pour fournir de l'énergie électrique, comprenant :
la sélection de l'une ou de l'autre parmi de l'énergie électrique principale fournie à partir d'une batterie et de l'énergie électrique de sortie CC (DCO) fournie à partir d'un convertisseur CC/CC (110) pour fournir de l'énergie électrique sélectionnée à au moins un régulateur à LDO (120) en tant qu'énergie électrique d'entrée ; et
le changement de l'énergie électrique sélectionnée fournie à l'au moins un régulateur à LDO (120) à l'autre en fonction d'un état d'une charge consommatrice d'énergie électrique qui est connectée, à une extrémité de sortie de l'au moins un régulateur à LDO (120) ;
dans lequel le changement de l'énergie électrique sélectionnée inclut la détection du courant à la sortie du convertisseur CC/CC (110) et le changement de l'entrée à l'au moins un régulateur à LDO (120) pour qu'une valeur de courant détectée ne dépasse pas une valeur de courant de référence prédéterminée et l'énergie électrique de l'au moins un régulateur à LDO (120) dans la sélection d'une tension aussi basse que possible qui est appropriée pour l'au moins un régulateur à LDO (120).

6. Procédé selon la revendication 5, dans lequel :
un élément de commutation (140) est prévu à une extrémité d'entrée de l'au moins un régulateur à LDO (120), pour sélectionner l'une ou l'autre parmi l'énergie électrique principale et l'énergie électrique de DCO,
et l'élément de commutation (140) est séparément prévu à l'extrémité d'entrée de l'au moins un régulateur à LDO (120) ou prévu en commun à des extrémités d'entrée respectives d'une pluralité des régulateurs à LDO (120).
